# EUROPÄISCHE PATENTSCHRIFT

(11) **EP 2 251 579 B1**
(45) Veröffentlichungstag und Bekanntmachung des Hinweises auf die Patenterteilung: **09.05.2012**
(21) Anmeldenummer: 10002603.8
(22) Anmeldetag: 12.03.2010
(51) Int. Cl.: F16L 3/12, F16L 3/137, F16L 33/04, B60K 13/04, F16B 2/08, F01N 13/18

(54) **Schelle**
Clamp
Collier de serrage

(30) Priorität: 30.04.2009 DE 102009019670
(43) Veröffentlichungstag der Anmeldung: 17.11.2010
(73) Patentinhaber: HYDAC Accessories GmbH, 66280 Sulzbach/Saar (DE)
(72) Erfinder: Caspari, Jochen, 66606 St. Wendel (DE)
(74) Vertreter: Bartels & Partner

(56) Entgegenhaltungen:
- DE-B3-102005 059 118
- DE-C1- 19 518 309
- DE-U- 1 960 931
- DE-U1- 29 608 259
- FR-A1- 2 862 915
- US-A- 2 826 385
- US-A- 3 567 165
- US-A- 5 310 158

## Beschreibung

Die Erfindung betrifft eine Schelle mit einem biegsamen Halteband, das einen Aufnahmeraum begrenzt und an seinem jeweils freien Ende eine, eine Zugkraft im Halteband zum Festlegen eines Bauteils im Aufnahmeraum erzeugende Verschlußeinrichtung aufweist, und mit einem Schellen-Halteteil für die Lagefixierung des Haltebandes an einer Haltefläche auf der vom Aufnahmeraum abgekehrten Seite des Schellen-Halteteils, wobei zumindest an einer Stelle des Austritts des Haltebands aus dem Schellen-Halteteil mindestens ein federelastisch nachgiebiges Zungenteil vorsteht, an das das Halteband zumindest beim Festlegen des Bauteils in der Schelle anlegbar ist.

Eine derartige Schelle ist aus DE 10 2005 059 118 B3 bekannt. Bei der bekannten Schelle ist zwischen der Haltefläche des Halteteils und dem Halteband ein Kompensationsteil vorgesehen, das das Halteband zumindest bereichsweise von der Haltefläche in einem Abstand hält, dessen Größe in Abhängigkeit von der Höhe der Zugkraft im Halteband veränderlich ist. Als Kompensationsteil ist ein bandartiges Federelement vorgesehen, das sich zumindest entlang eines Großteils der Länge der Haltefläche erstreckt und als in Bandlängsrichtung wellenartig geformtes Band aus Federstahl derart geformt ist, dass im Wechsel Wellenberge und Wellentäler ausgebildet sind. Die äußeren Enden des Federbandes sind wellenfrei ausgebildet und erstrecken sich durch die zum Durchtritt des Haltebandes vorgesehene Durchbrüche im Halteteil hindurch.

US 3,567,165 offenbart ein Sicherungsteil für eine zylinderförmige Schelle, mit einem kreislinienartigen Halteteil, welches an einem Abschnitt der Innenfläche der Schelle anliegt und ein Paar einstückig mit dem Halteteil ausgebildete Stützteile aufweist, die an gegenüberliegenden Endbereichen vom Halteteil abstehen. Die Stützteile stehen derart vom Halteteil ab, dass sie in Anlage mit der Oberfläche, an welcher die Schelle zu sichern ist, kommen. Zur Aufnahme einer Befestigung ist eine Öffnung in einem der Stützteile vorgesehen.

DE 1 960 931 U1 offenbart eine Haltevorrichtung für Bandschellen, ausgezeichnet durch eine im Wesentlichen rechteckige Platte mit mindestens zwei rechteckförmigen Ausnehmungen von mindestens der Breite des Schellenbandes und mit mindestens einer dazwischenliegenden, zum Durchstecken eines Befestigungsmittels geeigneten Öffnung. Die beiden Teile der Platten sind in der Höhe der Ausnehmungen abgebogen; weiter weisen die an der Biegestelle liegenden Randteile der Platte eine Materialschwächung auf.

Aus US 5,310,158 ist eine im Kraftfahrzeugbereich einsetzbare Schellenanordnung bekannt, mittels derer an einem zylinderförmigen Bauteil, wie einem Schalldämpfer, ein Aufhängeteil befestigt werden kann. Das das Bauteil umgebende Schellenband ist mit einer gekrümmten, teilhülsenförmigen Befestigungsplatte verbunden, über die das Aufhängeteil ortsfest am Bauteil des Kraftfahrzeugs gehalten wird. Durch in radialer Richtung vorstehende Teile der Befestigungsplatte wird eine axiale Verschiebung des Aufhängeteils gegenüber dem Schellenband und folglich gegenüber dem vom Schellenband umschlossenen Bauteil vermieden.

FR 2 862 915 A1 offenbart eine ebenfalls im Kraftfahrzeugbereich einsetzbare Schelle, wobei zur Halterung einer Befestigungsplatte ein radial außenliegender Halteteil vorgesehen ist, welcher abgewinkelte Zungenteile aufweist. Eine vergleichbare Anordnung ist aus US 2,826,385 bekannt.

DE 296 08 259 U1 zeigt und beschreibt eine Konsolenschelle mit mindestens zwei mit jeweils einer Verschlusseinrichtung versehenen Spannbändern zum Festlegen von im Querschnitt im Wesentlichen kreisförmigen Körpern, wobei die jeweiligen Spannbänder über eine Mittenkonsole festgelegt sind, die zwischen den Körpern angeordnet ist. Die Mittenkonsole ist aus einem flachen, rechteckförmigen Zuschnitt gebildet, der an einander gegenüberliegenden Enden mit jeweils einem U-förmigen Ausschnitt versehen ist und Laschen ausbildet, die an ihren freien Enden paarweise in entgegengesetzter Richtung längs einer Biegelinie um einen vorgebbaren Winkel hochstellbar sind. Um die kreisförmigen Körper parallel zueinander verlaufend festzulegen, weist die zwischen ihnen anzuordnende Mittenkonsole auf beiden gegenüberliegenden Seiten jeweils ein Paar von hochstellbaren Laschen auf.

Die DE 195 18 309 C1 beschreibt eine Schelle, die man fachsprachlich auch mit Gelenkband-Konsolenschelle bezeichnet, welche insbesondere für die Befestigung von verhältnismäßig großvolumigen Aufnahmeteilen, wie Druckbehälter oder Teilen von Abgasanlagen von Personenkraftwagen oder Nutzfahrzeugen, eingesetzt sind. Derartige Schellen unterliegen im Betrieb beispielsweise von Nutzfahrzeugen hohen dynamischen und/oder thermischen Belastungen, wobei mehrachsige Kerbspannungszustände an Komponentenübergängen der Schelle oder in Komponenten der Schelle selbst bei deren Auslegung Berücksichtigung erfahren.

Bei den bekannten Schellenlösungen ist es jedoch nicht ausgeschlossen, dass aufgrund von Materialermüdung von Einzelkomponenten und insbesondere des Haltebandes Ermüdungsbrüche auftreten können, was natürlich nicht erwünscht ist.

Der Erfindung liegt daher die Aufgabe zugrunde, eine Schelle der gattungsgemäßen Art derart weiter auszubilden, dass eine lange Lebensdauer garantiert ist.

Diese Aufgabe wird gelöst durch eine Schelle mit den Merkmalen von Patentanspruch 1 in seiner Gesamtheit. Gemäß dem kennzeichnenden Teil von Patentanspruch 1 zeichnet sich eine erfindungsgemäße Schelle dadurch aus, dass das jeweilige federelastisch nachgiebige Zungenteil einstückiger Bestandteil eines Gleitbandes ist, das sich in vollflächiger Anlage entlang der Haltefläche des Schellen-Halteteils erstreckt, und dass die Zungenteile über die dahingehende Haltefläche hinaus nach außen hin um eine jeweils vorgebbare Länge vorstehen.

Bei einer erfindungsgemäßen Schelle sind an beiden gegenüberliegenden Enden des Schellen-Halteteils die federelastisch nachgiebigen Zungenteile vorgesehen, die Bestandteil eines einstückigen Gleitbandes sind, das zwischen der Haltefläche des Schellen-Halteteils und dem Halteband angeordnet ist. Das Gleitband weist bevorzugt einen ähnlichen Elastizitätsmodul auf wie das Halteteil. Für eine vollflächige Anlage des Haltebandes sind die jeweiligen Zungenteile zumindest so breit ausgebildet wie das Halteband selbst. Auch weisen die Zungenteile und das Halteband bevorzugt etwa gleiche Elastizitätsmodulwerte auf; insbesondere können die Wandstärken der beiden genannten Bauteile einander entsprechen.

Das jeweilige Zungenteil vergrößert insbesondere den Kerbradius an den tangentialen Enden des Schellen-Halteteils deutlich und übt demgemäß eine spannungsmechanische Stützwirkung auf das Halteband aus. Ein Ermüdungsbruch des Haltebandes an diesen Stellen wird dadurch mit Sicherheit vermieden. Weiter ist dadurch, dass das jeweilige federelastisch nachgiebige Zungenteil Bestandteil, insbesondere einstückiger Bestandteil, eines eigenständigen Bauteils ist, welches zwischen einer Haltefläche des Schellen-Halteteils und dem Halteband angeordnet ist, ein besonders kostengünstiger und von der Herstellung her gesehen sicherer Schellenaufbau erreicht. Insbesondere ist das Schellen-Halteteil aus einem Kunststoffmaterial, auch in Form eines faserverstärkten Kunststoffmaterials, aufgebaut.

Bevorzugte Ausführungen der erfindungsgemäßen Schelle ergeben sich aus den Unteransprüchen.

Im Betrieb der Schelle sind die jeweiligen Zungenteile überwiegend durch Druckspannungen oder Biegespannungen belastet, wobei sie den Querschnittsübergang von der Haltefläche zu dem Halteband im Sinne einer Reduzierung mehrachsiger Kerbspannungszustände günstig beeinflussen können.

Bei einem besonders bevorzugten Ausführungsbeispiel sind die Zungenteile aus demselben Werkstoff wie etwa aus Stahl oder Federstahl gebildet und weisen in Abhängigkeit ihres E-Moduls im Vergleich zu dem E-Modul des Haltebandes etwa dieselbe Materialstärke wie das Halteband selbst auf.

Für eine optimal kerbspannungsmindernde Wirkung ist bevorzugt vorgesehen, das Gleitband mindestens etwa 5 % bis 20 % in seiner Länge größer auszubilden als die zuordenbare Haltefläche in radialer Richtung gesehen. Um eine Montage der Schelle in Bereichen eines Nutzfahrzeuges od. dgl. zu erleichtern, sind die jeweiligen Zungenteile an der Haltefläche kraftschlüssig oder formschlüssig oder stoffschlüssig, beispielsweise mit Hilfe mindestens eines Schweißpunktes, an dem Schellen-Halteteil festgelegt. Diese Vorfixierung kann sich ohne die Funktion beeinträchtigende Folgen im Betrieb später wieder lösen, insbesondere wird durch die Bandspannung das Gleitband durch das Halteband am Halteteil festgelegt.

Im folgenden ist die Erfindung anhand eines Ausführungsbeispiels nach der Zeichnung im einzelnen erläutert. Es zeigen:
- Fig.1: eine Seitenansicht auf eine erfindungsgemäße Schelle mit Halteband und Gleitband;
- Fig.2: eine Draufsicht auf das Schellen-Halteteil nach der Fig.1;
- Fig.3: eine perspektivische Ansicht des Schellen-Halteteils mit Gleitband, aber ohne Halteband, vergleichbar der Darstellung nach der Fig.1.

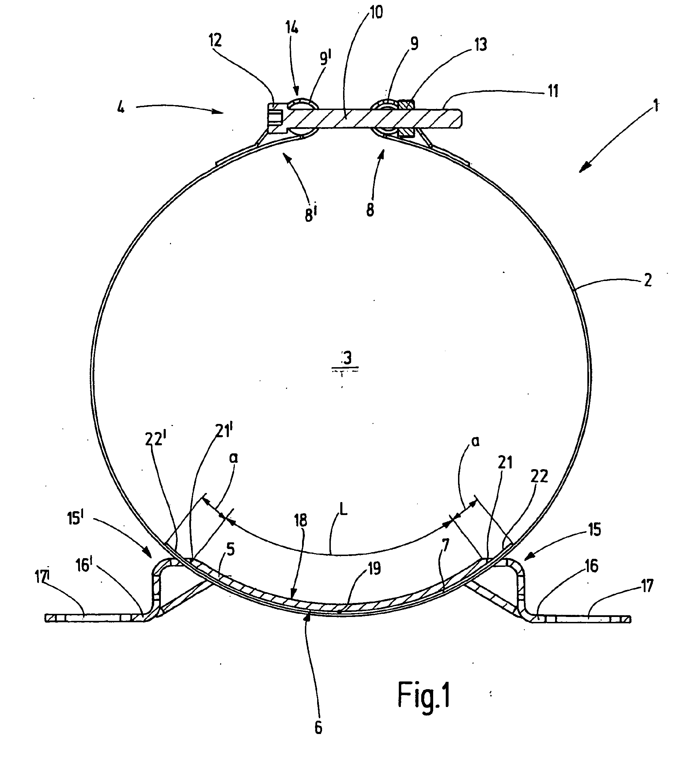

In der Fig.1 ist in einer Seitenansicht und im oberen Bereich teilweise in einer Längsschnittdarstellung eine Schelle 1 zur Festlegung eines nicht näher dargestellten rohrförmigen Körpers, beispielsweise in Form von Teilen einer Abgasanlage eines Nutzfahrzeuges, gezeigt. Die Schelle 1 weist ein als Halteband 2 gebildetes biegsames Spannband auf, das zumindest im Ausgangszustand im Querschnitt gesehen kreisförmig ausgebildet ist und einen Aufnahmeraum 3 für den nicht gezeigten rohrförmigen Körper begrenzt. Das Halteband 2 ist jeweils an seinem freien Ende 8,8' umgebogen und umschließt jeweils einen Zapfen 9,9', die Bestandteil einer als Ganzes mit 4 bezeichneten Verschlußeinrichtung sind. Die Verschlußeinrichtung 4 ist ferner durch einen verschwenkbaren Schraubenbolzen 10 charakterisiert, der an seinem freien Ende ein Gewinde 11 und an seinem anderen Ende einen Schraubenkopf 12 trägt.

Auf das Gewinde 11 des Schraubenbolzens 10 ist eine Mutter 13 aufschraubbar, die den Abstand der Enden 8,8' des Haltebandes 2 vorgibt. Im Bereich der Zapfen 9,9' ist wiederum das Halteband 2 längsgeteilt und der Zapfen 9' weist eine nach oben hin offene vorzugsweise ovale Ausnehmung auf, die zum Herstellen einer Art Schnellverschluß den Eingriff des von oben her einschwenkbaren Schraubenbolzens 10 erlaubt. Der andere Zapfen 9, der eine Durchgangsbohrung für den Durchtritt des Schraubenbolzens 10 aufweist, ist innerhalb des umgebogenen Haltebandes 2 drehbar gehalten, um die zum Ein- und Ausschwenken des Schraubenbolzens 10 erforderliche Beweglichkeit zur Verfügung zu stellen. Einzelheiten der dahingehenden Lösung sind bekannt und beispielsweise in der DE 195 18 309 C1 aufgezeigt.

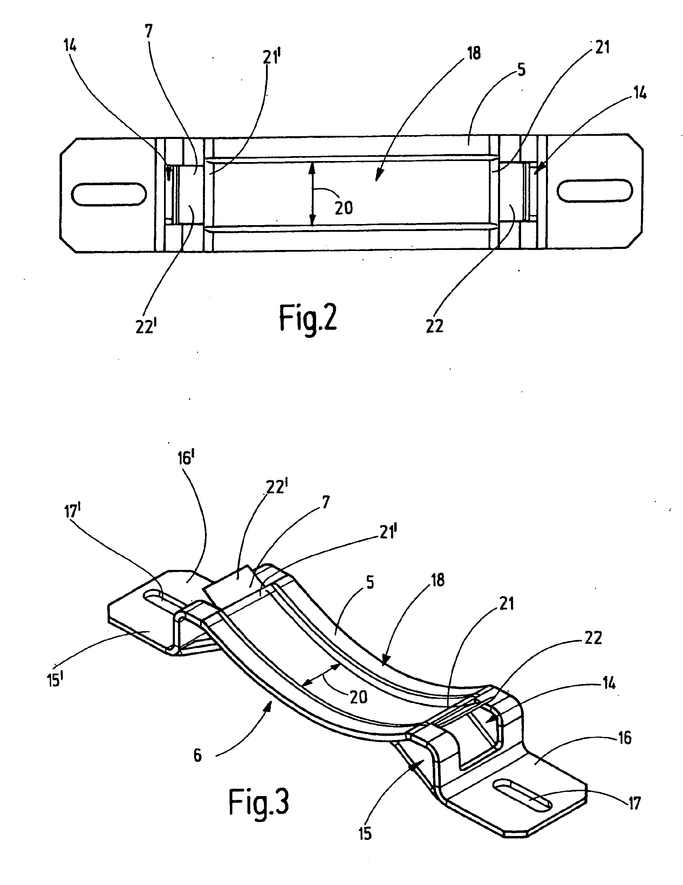

Die Schelle 1 weist des weiteren ein Schellen-Halteteil 5 auf, das für den Durchtritt des Haltebandes 2 mit zwei Durchbrüchen 14 (vgl. Fig.2 und 3) versehen ist, die jeweils im Bereich einer Umlenkstelle 15,15' angeordnet sind, an der das Halteteil 5 derart gekröpft ist, dass es in jeweils ein winkliges Fußteil 16,16' übergeht. Die zu beiden Seiten des Halteteils 5 angeordneten Fußteile 16,16' sind mit Langlöchern 17,17' od. dgl. versehen, an denen sie an ihrer Umgebung, beispielsweise an Blechwandteilen eines Nutzfahrzeuges, festlegbar sind. Die beiden Fußteile 16,16' sind des weiteren mittels paarweise angeordneter, schräg verlaufender Stützen gegenüber der mittleren Auflagescheibe des Schellen-Halteteils 5 ausgesteift.

Wie die Fig. 1 und 3 weiter zeigen, ist das Schellen-Halteteil 5 in dem zwischen den Umlenkstellen 15,15' gelegenen mittleren Längenabschnitt unter Bildung der Auflageschelle kreis-segmentförmig gebogen, so dass es mit der im Aufnahmeraum 3 der Schelle 1 zugekehrten Seite eine ebenso gewölbte Anlagefläche 18 für den nicht gezeigten rohrförmigen Körper bildet, wobei es mit der vom Aufnahmeraum 3 abgekehrten Seite eine Haltefläche 6 bildet, auf der das Halteband 2 dann abgestützt ist. Radial zwischen der massiv und unelastisch ausgebildeten Haltefläche 6 und dem elastisch nachgiebigen Halteband 2 ist ein Gleitband 7 eingelegt und vorzugsweise mit einem einzigen Schweißpunkt 19 an dem Schellen-Halteteil 6 festgelegt. Das Gleitband hat im wesentlichen dieselbe Breite 20 wie diejenige des Haltebandes 2. Das Gleitband 7 ist allerdings über die Endkanten 21,21' der Haltefläche 6 überstehend ausgebildet, und zwar um eine vorgebbare Länge a zu beiden Seiten hin. Durch den dahingehenden Überstand sind federelastische Zungenteile 22,22' für die Enden des Gleitbandes 7 erreicht, so dass jedwede Kerbwirkung beim Festlegevorgang auf das Halteband 2 ausgeschlossen ist. Das Gleitband 7 ermöglicht insbesondere eine Reduktion der Flächenpressung auf das Halteband 2 und einen völligen Ausschluß einer Kerbwirkung betreffend die Endkanten 21,21' der Haltefläche 6 auf das Halteband 2 wie sonst üblich.

## Patentansprüche

1. Schelle
- mit einem biegsamen Halteband (2), das einen Aufnahmeraum (3) begrenzt und an seinem jeweils freien Ende eine, eine Zugkraft im Halteband (2) zum Festlegen eines Bauteils im Aufnahmeraum (3) erzeugende Verschlußeinrichtung (4) aufweist, und
- mit einem Schellen-Halteteil (5) für die Lagefixierung des Haltebandes (2) an einer Haltefläche (6) auf der vom Aufnahmeraum (3) abgekehrten Seite des Schellen-Halteteils (5),
- wobei zumindest an einer Stelle des Austritts des Haltebandes (2) aus dem Schellen-Halteteil (5) mindestens ein federelastisch nachgiebiges Zungenteil (22,22') vorsteht, an das das Halteband (2) zumindest beim Festlegen des Bauteils in der Schelle anlegbar ist,
- **dadurch gekennzeichnet, dass** das jeweilige federelastisch nachgiebige Zungenteil (22, 22') einstückiger Bestandteil eines Gleitbandes (7) ist, das sich in vollflächiger Anlage entlang der Haltefläche (6) des Schellen-Halteteils (5) erstreckt, und
- dass die Zungenteile (22, 22') über die dahingehende Haltefläche (6) hinaus nach außen hin um eine jeweils vorgebbare Länge (a) vorstehen.

2. Schelle nach Anspruch 1, **dadurch gekennzeichnet, dass** das jeweilige federelastisch nachgiebige Zungenteil (22, 22') einen vergleichbaren Elastizitätsmodul aufweist wie das Halteband (2).

3. Schelle nach einem der vorhergehenden Ansprüche, **dadurch gekennzeichnet, dass** das jeweilige Zungenteil (22, 22') zumindest so breit ist wie das geführte Halteband (2).

4. Schelle nach einem der vorhergehenden Ansprüche, **dadurch gekennzeichnet, dass** das jeweilige Zungenteil (22, 22') überwiegend durch Druckspannungen oder ausschließlich durch Druck- und Biegespannungen belastet ist.

5. Schelle nach einem der vorhergehenden Ansprüche, **dadurch gekennzeichnet, dass** das jeweilige Zungenteil (22, 22') den Querschnittsübergang von der Haltefläche (6) zu dem Halteband (2) im Sinne einer Reduzierung mehrachsiger Kerbspannungszustände beeinflußt.

6. Schelle nach einem der vorhergehenden Ansprüche, **dadurch gekennzeichnet, dass** das jeweilige Zungenteil (22, 22') und das Halteband (2) aus demselben Werkstoff, insbesondere aus einem Stahlwerkstoff gebildet sind.

7. Schelle nach einem der vorhergehenden Ansprüche, **dadurch gekennzeichnet, dass** die Materialstärke des Haltebandes (2) und die des jeweiligen Zungenteils (22, 22') etwa gleich groß gewählt ist.

8. Schelle nach einem der vorhergehenden Ansprüche, **dadurch gekennzeichnet, dass** das Gleitband (7) in Umfangsrichtung des Haltebandes (2) etwa 5 % bis 20 % größer gewählt ist als die korrespondierende Länge (L) der Haltefläche (6), und dass beidseitig etwa gleich weit mit der vorgebbaren Länge (a) über die Haltefläche (6) hinausragt.

## Claims

1. A clamp
- comprising a flexible holding band (2) which defines a receiving space (3) and on its respective free end has a closure device (4) generating a tensile force in the holding band (2) for securing a component in the receiving space (3), and
- comprising a clamp holding part (5) for fixing the position of the holding band (2) on a holding surface (6) on the side of the clamp holding part (5) facing away from the receiving space (3),
- at least at one point of exit of the holding band (2) at least one elastically resilient tongue part (22,22') protruding from the clamp holding part (5), it being possible to rest the holding band (2) against said tongue part at least when securing the component in the clamp,
- **characterised in that** the respective elastically resilient tongue part (22,22') is a one-piece component of a sliding band (7) which extends with full-surface contact along the holding surface (6) of the clamp holding part (5), and
- that the tongue parts (22,22') project outward over this holding surface (6) by a respective pre-determinable length (a).

2. The clamp according to Claim 1, **characterised in that** the respective elastically resilient tongue part (22,22') has an elasticity module comparable to the holding band (2).

3. The clamp according to any of the preceding claims, **characterised in that** the respective tongue part (22,22') is at least as wide as the guided holding band (2).

4. The clamp according to any of the preceding claims, **characterised in that** the respective tongue part (22,22') is predominantly loaded by compressive stresses or exclusively by compressive and bending stresses.

5. The clamp according to any of the preceding claims, **characterised in that** the respective tongue part (22,22') affects the cross-section crossover from the holding surface (6) to the holding band (2) in the sense of a reduction of multi-axle notch stress states.

6. The clamp according to any of the preceding claims, **characterised in that** the respective tongue pars (22,22') and the holding band (2) are formed from the same material, in particular from a steel material.

7. The clamp according to any of the preceding claims, **characterised in that** the material thickness of the holding band (2) and that of the respective tongue part (22,22') is chosen to be approximately equal.

8. The clamp according to any of the preceding claims, **characterised in that** the sliding band (7) in the circumferential direction of the holding band (2) is chosen to be approximately 5% to 20% larger than the corresponding length (L) of the holding surface (6), and that on both sides it projects to approximately the same extent with the pre-definable length (a) over the holding surface (6).

## Revendications

1. Collier de serrage
- comprenant un collier (2) souple de support, qui délimite un logement (3) et qui a à son extrémité libre un dispositif (4) de fermeture produisant une force de traction dans le collier (2) de support pour la fixation d'un élément dans le logement (3), et
- comprenant une partie (5) de maintien du collier de serrage pour l'immobilisation en position du collier (2) de support sur une surface (6) de maintien du côté de la partie (5) de maintien du collier de serrage éloigné du logement (3),
- dans lequel au moins en un point, où le collier (2) de support sort de la partie (5) de maintien du collier de serrage, dépasse une partie (22, 22') formant languette, qui cède élastiquement à la manière d'un ressort et à laquelle le collier (2) de support peut s'appliquer au moins lors de la fixation de l'élément dans le collier de serrage,
- **caractérisé en ce que** la partie (22, 22') formant languette et cédant élastiquement à la manière d'un ressort fait partie d'une seule pièce d'un collier (7) glissant, qui s'étend en contact sur toute la surface le long de la surface (6) de maintien de la partie (5) de maintien du collier de serrage, et
- **en ce que** les parties (22, 22') formant languette dépassent d'une longueur (a) pouvant être prescrite respectivement vers l'extérieur de la surface (6) de maintien.

2. Collier de serrage suivant la revendication 1, **caractérisé en ce que** la partie (22, 22') formant languette et cédant élastiquement à la manière d'un ressort a un module d'élasticité comparable à celui du collier (2) de support.

3. Collier de serrage suivant l'une des revendications précédentes, **caractérisé en ce que** la partie (22, 22') formant languette est au moins aussi large que le collier (2) de support guidé.

4. Collier de serrage suivant l'une des revendications précédentes, **caractérisé en ce que** la partie (22, 22') formant languette est sollicitée d'une manière prépondérante par des contraintes de pression ou exclusivement par des contraintes de pression et de flexion.

5. Collier de serrage suivant l'une des revendications précédentes, **caractérisé en ce que** la partie (22, 22') formant languette influence la transition de section transversale de la surface (6) de maintien au collier (2) de support dans le sens d'une réduction de contraintes d'entaille suivant plusieurs axes.

6. Collier de serrage suivant l'une des revendications précédentes, **caractérisé en ce que** la partie (22, 22') formant languette et le collier (2) de maintien sont en le même matériau, notamment en un matériau en acier.

7. Collier de serrage suivant l'une des revendications précédentes, **caractérisé en ce que** l'épaisseur du matériau du collier (2) de support et celle de la partie (22, 22') de languette sont à peu près les mêmes.

8. Collier de serrage suivant l'une des revendications précédentes, **caractérisé en ce que** le collier (7) de glissement est plus grand d'environ 5 % à 20 % dans la direction périphérique du collier (2) de support que la longueur (L) correspondante de la surface (6) de maintien, et **en ce qu'**il dépasse des deux côtés de la surface (6) de maintien à peu près de la même façon par la longueur (a) pouvant être prescrite.
